# EUROPEAN PATENT APPLICATION

(11) **EP 4 749 960 A1**
(43) Date of publication of application: **27.05.2026**
(21) Application number: 25209072.5
(22) Date of filing: 16.10.2025
(51) Int. Cl.: H04L 1/00, H04L 9/40

(54) **HIGH INTEGRITY TIME-SENSITIVE NETWORK END SYSTEM**

(30) Priority: 25.11.2024 US 202463724661 P
(71) Applicant: GE Aviation Systems LLC, Grand Rapids, MI 49512 (US)
(72) Inventor: JABBAR, Abdul, Grand Rapids, 49512 (US); PRINCE, Daniel, Grand Rapids, 49512 (US)
(74) Representative: Openshaw & Co.

(57) **Abstract**

Systems (124), methods (700), and other embodiments described herein relate to maintaining the integrity of data transmitted via a time-sensitive network (TSN) end system (124). In one embodiment, a method (700) includes, in response to receiving a data message (314) from an application (512), forming an integrity-enhanced TSN data message (344) by appending an integrity field (330, 332, 334, 336) to the data message (314). The integrity field (330, 332, 334, 336) is at least one or more of a timestamp (320), a checksum (322), a source identifier (324), and a sequence value (326). The method (700) includes transmitting the integrity-enhanced TSN data message (344) to a physical layer (310) via a TSN end system protocol stack (300). The TSN end system protocol stack (300) includes at least one or more of an application interface layer (302), a middleware layer (304), a network stack layer (306), and a TSN end station (308).

## Description

### CROSS-REFERENCE TO RELATED APPLICATION

This patent application makes reference to, claims priority to, and claims benefit from U.S. Provisional Patent Application No. 63/724,661 titled "High Integrity TSN End System" filed on November 25, 2024; which is hereby incorporated herein by reference in its entirety.

### TECHNICAL FIELD

The subject matter described herein relates, in general, to systems and methods for maintaining data transmission integrity within a time-sensitive network (TSN) end system.

### BACKGROUND

For contemporary aircraft, an avionics 'platform' consists of a variety of elements such as sensors, data concentrators, a data communications network, radio frequency sensors and communication equipment, computational elements, effectors, and graphical displays. These components must share error-free information with other components over the data communications network in a timely manner.

Network components utilized to construct the data communications network can utilize a specialized data protocol, including relays, switches, communicative connections, and the like, to ensure performance of the network architecture for the specialized data, as for example, under the performance of the network communications defined by the ARINC 664 Part 7 specification.

### BRIEF DESCRIPTION OF THE DRAWINGS

The accompanying drawings, which are incorporated in and constitute a part of the specification, illustrate various systems, methods, and other embodiments of the disclosure. It will be appreciated that the illustrated element boundaries (e.g., boxes, groups of boxes, or other shapes) in the figures represent one embodiment of the boundaries. In some embodiments, one element may be designed as multiple elements or multiple elements may be designed as one element. In some embodiments, an element shown as an internal component of another element may be implemented as an external component and vice versa. Furthermore, elements may not be drawn to scale.
FIG. 1 illustrates an example of an aircraft that includes a time-sensitive network.
FIG. 2 illustrates an Open Systems Interconnection (OSI) model.
FIGS. 3A-3B show an example of protocol stacks in a TSN end system.
FIGS. 4A-4B show another example of protocol stacks in a TSN end system.
FIGS. 5A-5B show another example of protocol stacks in a TSN end system.
FIG. 6 illustrates one embodiment of a TSN end system controller.
FIG. 7 is a flowchart illustrating one embodiment of a method for maintaining data integrity within a TSN end system.

### DETAILED DESCRIPTION

Systems, methods, and other embodiments associated with maintaining data integrity within a time-sensitive network (TSN) end system are disclosed. A TSN aircraft network may be used to transfer, transmit, and/or receive data between applications and/or components within an aircraft and more generally, between applications and/or components within the aircraft and supporting the aircraft, internally and/or externally. It is important for the data to be transmitted in a timely manner and remain error-free.

Some approaches may include utilizing an Avionics Full-Duplex Switched Ethernet (AFDX), which is also known as ARINC 664. The ARINC 664 includes a protocol stack, and within the protocol stack, the ARINC 664 includes multiple stages for performing error checks on the data messages being transmitted through the ARINC 664. This may require additional resources (which may be costly) to perform error checks at the multiple stages and may cause time delays. Another approach may include an Ethernet network using Time-Sensitive Networking as defined in IEEE 802.1 standards. In such an approach, additional mechanisms are needed to ensure data integrity in TSN-based networks.

Accordingly, systems, methods, and other embodiments associated maintaining data integrity within a time-sensitive network (TSN) end system are disclosed. In one embodiment, the disclosed approach includes a Time-Sensitive Network (TSN) End System. The TSN end system includes a protocol stack that further includes multiple layers such as a middleware layer. The middleware layer may include data encoding, data representation, data encryption, and management of interhost communication such as publish/subscribe and/or client server. The disclosed approach includes, via the middleware layer, adding information within the header of TSN data messages being transmitted through the TSN end system to maintain and/or improve temporal integrity, data integrity, source integrity, and/or ordinal integrity of the TSN data messages.

Temporal integrity ensures that the TSN data message(s) are received in a timely manner and within a suitable time frame. The disclosed approach utilizes a fault-tolerant timing solution to provide common time reference for timestamping data for temporal integrity. As an example, the fault-tolerant timing solution may include a generic Precision Time Protocol (gPTP) to generate a timestamp. The method may include generating the timestamp and including the timestamp in the header of the TSN data message. As an example, the timestamp may be included in a temporal integrity field in the header of the TSN data message(s).

Data integrity ensures that the data within the TSN data message(s) is error-free. The method includes generating a check bit or a checksum based on applying any suitable algorithm or function to the data within the TSN data message(s). As an example, the method may include generating the checksum using a 32-, 64-, or 128-bit cyclic redundancy check (CRC) algorithm. The method may further include adding the check bit or checksum in the header. As an example, the check bit or checksum may be included in a data integrity field in the header of the TSN data message(s).

Source integrity ensures that the TSN data message(s) are originating from a known and/or expected source. The method may include generating a talker identifier, a node identifier, or any suitable source identifier and including the talker identifier, the node identifier, or the suitable source identifier in the header. As an example, the talker identifier, the node identifier, or the suitable source identifier may be included in a source integrity field in the header of the TSN data message(s).

Ordinal integrity ensures that the TSN data message(s) are being received in a correct order. The method may include generating a sequence value for each TSN data message and including the sequence value in the header. As an example, the sequence value may be included in an ordinal integrity field in the header of the TSN data message(s).

The method includes, on a transmit side, incorporating one or more of the timestamp, the checksum, the source identifier, and the sequence value into the header of TSN data message being transmitted through the TSN end system, from, as an example, a network layer to a physical layer. The method may further include cross checking the TSN data message prior to being transmitted to the physical layer.

The method includes, on a receive side, extracting one or more of the timestamp, the checksum, the source identifier, and the sequence value from the header of TSN data message being received by the TSN end system, from, as an example, a physical layer and to be sent from the TSN end system to the network layer. After extracting, the method may include verifying or validating the timestamp, the checksum, the source identifier, and the sequence value. The method may further include cross checking the extracted timestamp, checksum, source identifier, and/or sequence value. The cross checking may be carried out at any suitable layer within the protocol stack. The method may include verification and/or validation before or after crosschecking the extracted timestamp, checksum, source identifier, and/or sequence value between two or more TSN data messages.

The TSN end system may use commercial off-the-shelf (COTS) and/or standardized layers. As an example, the network may be an aircraft data network.

The embodiments disclosed herein present various advantages over conventional technologies that provide data transmission. First, the embodiments utilize commercial off-the-shelf (COTS) and/or standardized layers, which is advantageous for reducing cost and utilizing reliable components. Second, the embodiments utilize existing network time protocols such as TSN gPTP (IEEE 802.1AS) time to broadcast the 1PPS signal and the 1PPS period. The embodiments may also utilize other Ethernet time protocols such as IEEE 1588 or White Rabbit. Third, the embodiments assist in maintaining and/or improving the integrity, as an example, temporal integrity, data integrity, source integrity, and/or ordinal integrity of the data being transmitted and received via the TSN end system.

In one embodiment, a system for maintaining the integrity of the data transmitted via a time-sensitive network (TSN) end system is disclosed. The system includes a processor and a memory in communication with the processor. The memory stores machine-readable instructions that, when executed by the processor, cause the processor to, in response to receiving a data message from an application, form an integrity-enhanced TSN data message by appending an integrity field to the data message. The integrity field includes at least one or more of a timestamp, a checksum, a source identifier, and a sequence value. The memory further stores machine-readable instructions that, when executed by the processor, cause the processor to transmit the integrity-enhanced TSN data message to a physical layer via a TSN end system protocol stack. The TSN end system protocol stack includes at least one or more of an application interface layer, a middleware layer, a network stack layer, and a TSN end station.

In another embodiment, a method for maintaining the integrity of the data transmitted via a time-sensitive network (TSN) end system is disclosed. The method includes, in response to receiving a data message from an application, forming an integrity-enhanced TSN data message by appending an integrity field to the data message. The integrity field includes at least one or more of a timestamp, a checksum, a source identifier, and a sequence value. The method further includes transmitting the integrity-enhanced TSN data message to a physical layer via a TSN end system protocol stack. The TSN end system protocol stack includes at least one or more of an application interface layer, a middleware layer, a network stack layer, and a TSN end station.

In another embodiment, a non-transitory computer-readable medium for maintaining the integrity of the data transmitted via a time-sensitive network (TSN) end system is disclosed. The non-transitory computer-readable medium includes instructions that when executed by a processor cause the processor to, in response to receiving a data message from an application, form an integrity-enhanced TSN data message by appending an integrity field to the data message. The integrity field includes at least one or more of a timestamp, a checksum, a source identifier, and a sequence value. The instructions further include instructions that when executed by the processor cause the processor to transmit the integrity-enhanced TSN data message to a physical layer via a TSN end system protocol stack. The TSN end system protocol stack includes at least one or more of an application interface layer, a middleware layer, a network stack layer, and a TSN end station.

Detailed embodiments are disclosed herein; however, it is to be understood that the disclosed embodiments are intended only as examples. Therefore, specific structural and functional details disclosed herein are not to be interpreted as limiting, but merely as a basis for the claims and as a representative basis for teaching one skilled in the art to variously employ the aspects herein in virtually any appropriately detailed structure. Further, the terms and phrases used herein are not intended to be limiting but rather to provide an understandable description of possible implementations. Various embodiments are shown in the figures, but the embodiments are not limited to the illustrated structure or application.

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details.

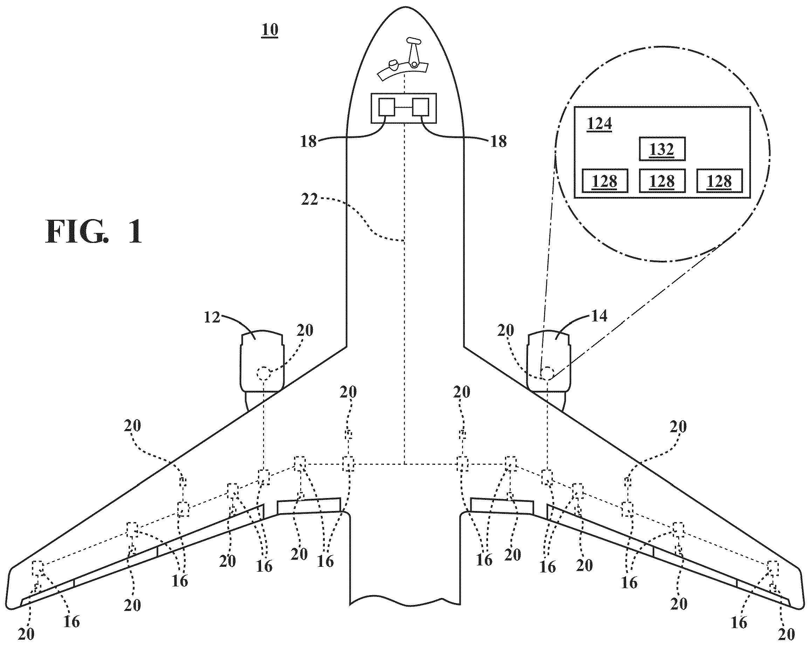

As illustrated in FIG. 1, an aircraft 10 can include at least one propulsion engine, shown as a left engine system 12 and right engine system 14. The aircraft 10 can further include one or more aircraft computers 18, including, but not limited to data storage or processing units, or functional systems such as the flight management system or autopilot system, and a set of fixed aircraft components, such as line-replaceable units (LRU) 20, networking end nodes (also referred to as "end systems") 124, or modular components of a vehicle or aircraft. In the aircraft environment, the aircraft computers or LRUs 20 can be designed to operate according to a particular operation, interoperability, or form factor standards, such as those defined by IEEE standards defining legacy Ethernet schema. In the exemplary aspects illustrated, the aircraft computers 18 can be positioned near the nose or cockpit of the aircraft 10 and the LRUs 20 can be positioned throughout the aircraft 10. The aircraft computers 18 and LRUs 20 can be configured to be communicatively coupled by way of a series of data transmission pathways 22, and network bridges or switches 16. The data transmission pathways 22 can include a physical connection between the respective components 18, 20, such as a wired connection including Ethernet, or can include wireless transmission connections, including, but not limited to, WiFi (e.g. 802.11 networks), Bluetooth, and the like. Collectively, the aircraft computers 18, LRUs 20, end systems 124, data transmission pathways 22, and network switches 16 can form an avionics data network for the aircraft 10.

The LRUs 20 can include, for example, entirely contained systems, sensors, radios, or other auxiliary equipment to manage or operate aircraft functions. At least a set of aircraft computers 18 or LRUs 20 can, for example, generate data, which can be modified, computed, or processed prior to, or in preparation for packaging the data into data frames to be transmitted over the avionics data network such as a time-sensitive network (TSN) by way of the data transmission pathways 22 or network switches 16. At least another set of aircraft computers 18 or LRUs 20 can, for example, consume the data transmitted over the avionics data network. In some instances, a single aircraft computer 18 or LRU 20 can operate to both generate and consume data. As used herein, "consume," "consuming," or "consumption" of data will be understood to include, but is not limited to, performing or executing a computer program, routine, calculation, or process on at least a portion of the data, storing the data in memory, or otherwise making use of at least a portion of the data.

The illustrated aircraft 10 is merely one non-limiting example of an aircraft 10 that can be used in aspects of the disclosure described herein. Particularities of the illustrated aircraft 10 aspects, including relative size, length, number of engines, type of engines, and location of various components are not germane to the aspects of the disclosure, unless otherwise noted.

In some example components, such as the aircraft computers 18 or LRUs 20, the components can be removably fixed to the aircraft for maintenance, diagnostics, or repair purposes, but statically fixed during, for example, flight. Additionally, while aircraft computers 18 and LRUs 20 are described, any data generating or data receiving or consuming components fixed relative to an aircraft can be included as aspects of the disclosure as fixed components. For example, systems such as a flight management system, primary flight display, cockpit display system, autopilot, or auto-land systems can be considered fixed components, as used herein.

Time-critical communication between end systems within the aircraft 10 as well as to and from the aircraft 10 may be over an avionics data network such as a time-sensitive network (TSN). A TSN end system 124 is attached to a network onboard an aerospace platform that is an initial source or a final destination of data transmitted across the network. The TSN end system 124 includes one or more TSN end stations 128. The TSN end station 128 is a functional unit in an IEEE 802^{®} Ethernet network that acts as a source of and/or destination for link layer data traffic carried on the network. The TSN end system 124 may include a TSN end system controller, which is described in detail below. The TSN standards suite consists of a number of standards and sub-standards that establish technological protocols for communication networks, for example, clock synchronization (802.1AS-2020), frame preemption (802.1Qbu), scheduled traffic (802.1Qbv), redundancy management (802.1CB), and per-stream filtering and policing (802.1Qci). These protocols cooperate at the Ethernet layer-2 to ensure that safety and compliance with their respective parameters and constraints. For example, the 802.1Qbv TSN standard provides scheduled transmissions for safety-critical data frames in a predetermined manner and is incorporated herein in its entirety. As used herein, "TSN schema" can refer, without limitation, to networks, components, elements, units, nodes, hubs, switches, controls, modules, pathways, data, data frames, traffic, protocols, operations, transmissions, and combinations thereof, that adhere to, are configured for, or are compliant with, one or more of IEEE 802.1 TSN standards.

The 802.1Qbv TSN standard addresses the transmission of critical and non-critical data traffic within a TSN. Critical data traffic is guaranteed for delivery at a scheduled time while non-critical data traffic is usually given lower priority. Various traffic classes have been established according to IEEE 802 1Q that are used to prioritize different types of data traffic. To achieve desired levels of reliability, TSNs employ time synchronization, and time-aware data traffic shaping. The data traffic shaping uses the schedule to control gating of transmissions on the network switches and bridges (e.g., nodes).

In some aspects, the schedules for such data traffic in TSNs can be determined prior to operation of the network. In other aspects, the schedules for data traffic can be determined during an initial design phase based on system requirements and updated as desired. For example, in addition to defining a TSN topology (including communication paths, bandwidth reservations, and various other parameters), a networkwide synchronized time for data transmission can be predefined. Such a plan for data transmission on communication paths of the network is typically referred to as a "communication schedule" or simply "schedule". As will be disclosed in more detail herein, the schedule for data traffic on a TSN can be determined for a specific data packet over a specific path, at a specific time, for a specific duration.

Time-critical communication between end devices or end systems 124 in TSNs commonly includes "TSN flows" also known as "data flows" or simply, "flows." For example, data flows can comprise datagrams, such as data packets or data frames. Each data flow is unidirectional, going from a first originating or source end device to a second destination end device in a system, having a unique identification and time requirement. These source devices and destination devices are commonly referred to as "talkers" and "listeners." Specifically, the "talkers" and "listeners" are the sources and destinations, respectively, of the data flows, and each data flow is uniquely identified by the end systems 124 operating in the network system. It will be understood that for a given network topology comprising a plurality of interconnected devices, a set of data flows between the interconnected devices or nodes can be defined. For example, the set of data flows can be between the interconnected devices. For the set of data flows, various subsets or permutations of the data flows can additionally be defined.

Both end systems 124 and Ethernet switches (commonly called "bridges" or "switching nodes") transmit and receive the data (in one non-limiting example, Ethernet frames) in a data flow based on a predetermined time schedule. The switching nodes and end systems 124 must be time-synchronized to ensure the predetermined time schedule for the data flow is followed correctly throughout the network. In some other aspects, only the Ethernet switches can transmit the data based on the pre-determined schedule, while the end systems 124, for example legacy devices, can transmit data in an unscheduled manner.

The data flows within a TSN can be scheduled using a single device that assumes fixed, non-changing paths through the network between the talker/listener devices and switching nodes in the network. Alternatively, the data flows can be scheduled using a set of devices or modules. The scheduling devices, whether a single device or a set of devices, can be arranged to define a centralized scheduler. In still other aspects, the scheduler devices can comprise a distributed arrangement. The TSN can also receive non-time sensitive communications, such as rate-constrained communications. In one non-limiting example, the scheduling devices can include an offline scheduling system or module.

In some cases, end system can be temporarily or permanently taken off-line or cease operation (for example, due to scheduled maintenance, or unexpected device failure), requiring new or updated data flows to be determined and scheduled quickly (for example, in real time) in order to maintain network operation. Due to the relatively large size and complexity of industrial networks, and the relatively large number of possible topologies for the network, determining and scheduling TSN data flows for the network in real time presents many challenges.

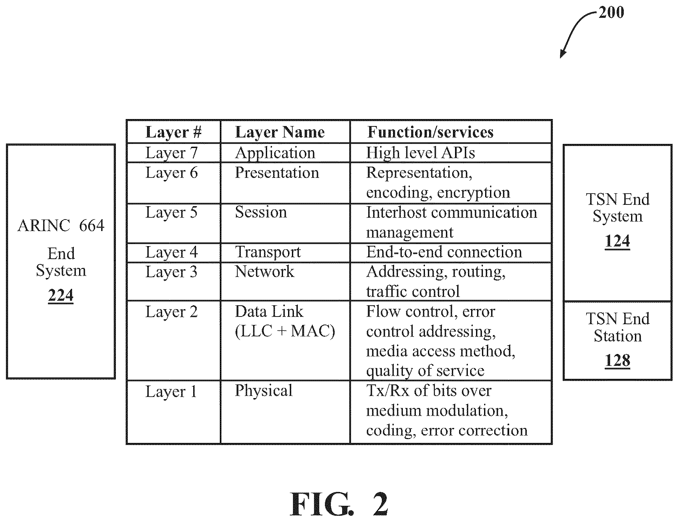

The Open Systems Interconnection (OSI) model 200 is shown in Fig. 2. The OSI model is a reference model from the International Organization for Standardization (ISO) that provides common basis for the coordination of standards development for the systems communication and interconnection. As shown, the OSI model, the communications between systems are split into seven different abstraction layers: Physical, Data Link, Network, Transport, Session, Presentation, and Application. The TSN end system 124 includes six different abstraction layers - Data Link, Network, Transport, Session, Presentation, and Application. The application layer is an abstraction layer that specifies the shared communication protocols and interface methods used by devices in the communications network. The functions of the application layer include high-level protocols such as for resource sharing or remote file access. The presentation layer serves as the data translator for the communications network. The functions of the presentation layer include character encoding, data compression and encryption/decryption. The session layer provides a mechanism for opening, closing and managing a session between end-user application processes. The presentation layer and the session layer can be part of a middleware layer. The transport layer provides the functional and procedural means of transferring variable-length data sequences from a source host to a destination host from one application to another across a network, while maintaining the quality-of-service functions. The network layer provides the functional and procedural means of transferring packets from one node to another connected in different networks. The functions of the network layer include addressing, routing, and traffic control. The data link layer provides flow control, error control addressing, media access method and quality of service (QoS). The TSN end station 128 is within the data link layer. The physical layer is responsible for the transmission and reception of unstructured raw data between a device, such as a network interface controller, Ethernet hub, or network switch, and a physical transmission medium. The physical layer converts digital bits into electrical, radio, or optical signals. For comparison, an ARINC 664 end system 224 extends from the application layer (layer 7) to the data link layer (layer 2). As previously mentioned, the TSN end system 124 includes the data link layer. In a transmit direction, the TSN end system 124 receives data from a component and/or an application and transmits data to the bridge(s) via the physical layer. In a receive direction, the TSN end system receives data from the bridge(s) via the physical layer and transmits to the component and/or the application.

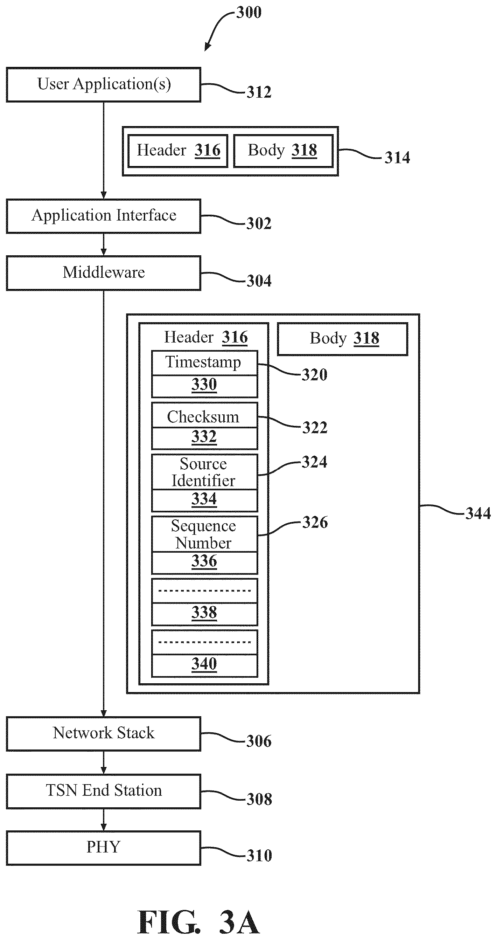

FIGS. 3A-3B show examples of protocol stacks 300, 350 in a time-sensitive network (TSN) end system 124. In other words, the TSN end system 124 includes a protocol stack 300, 350. In the embodiments illustrated in FIGS. 3A-3B, the TSN end system 124 includes a single protocol stack 300, 350 that interfaces with a user application 312, 362 and a single physical layer 310, 360. The user application 312, 362 may be the source devices and/or destination devices mentioned above and which are commonly referred to as "talkers" and/or "listeners." The protocol stack 300, 350 may include an application interface layer 302, 352, a middleware layer 304, 354, a network stack layer 306, 356, and the TSN end station 308, 358. The TSN end station 308, 358 is similar to the previously mentioned TSN end station 128.

In the transmit direction, the TSN end system 124 receives a data message 314 from the user application 312 and transmits an integrity-enhanced TSN data message 344 to the physical layer 310. In the receive direction, the TSN end system 124 receives the integrity-enhanced TSN data message 344 from the physical layer 360 and transmits the data message 314 to the user application 362.

FIG. 3A shows an example of the protocol stack 300 in the TSN end system 124 and in the transmit direction. In the transmit direction, the TSN end system 124 receives the data message 314 into the application interface layer 302 from the user application 312. The data message 314 may include a header 316 and a body 318. The TSN end system 124 transfers the data message 314 from the application interface layer 302 to the middleware layer 304. Within the middleware layer 304, the TSN end system 124 may generate a header 316 for the data message 314 in a case where the data message 314 does not have a header 316. Alternatively, the data message 314 coming into the middleware layer 304 may already include a header 316. The header 316 may already include integrity fields such as a time integrity field 330, a data integrity field 332, a source integrity field 334, and/or an ordinal integrity field 336. The header 316 may also include other fields 338, 340. The TSN end system 124 may determine whether to include one or more of the integrity fields 330, 332, 334, 336 based on user input and/or an automated system. As such, for user input, the TSN end system 124 may be programmed to generate and populate one or more of the integrity fields 330, 332, 334, 336 based on a setting in the user input.

In a case where the integrity fields 330, 332, 334, 336 do not exist in the header 316, the TSN end system 124 may generate the integrity field(s) 330, 332, 334, 336 in the middleware layer 304. The TSN end system 124 may then populate, via the middleware layer 304, one or more integrity fields 330, 332, 334, 336 in the header 316. The TSN end system 124 may generate one or more of a timestamp 320, a checksum 322, a source identifier 324, and a sequence value 326 to populate the one or more integrity fields 330, 332, 334, 336 of the integrity-enhanced TSN data message 344.

The TSN end system 124 may utilize a generic Precision Time Protocol (gPTP), or more specifically, a fault tolerant gPTP to determine a timestamp 320 for the data message 314. The TSN end system 124 may generate the timestamp 320 based on the gPTP and may populate the time integrity field 330 with the timestamp 320. The timestamp 320 may be based on a current time of the gPTP. The TSN end system 124 may generate a checksum 322 based on the incoming data message 314. The TSN end system 124 may generate the checksum 322 based on the data in the header 316 and/or the body 318 of the data message 314. The TSN end system 124 may generate the checksum 322 based on the integrity-enhanced TSN data message 344. The TSN end system 124 may utilize any suitable algorithm such as a cyclic redundancy check (CRC) to generate the checksum 322. The TSN end system 124 may then populate the data integrity field 332 with the checksum 322. The TSN end system 124 may generate a source identifier based on the origin or source of the data message 314, and then populate the source integrity field 334 with the source identifier 324. The TSN end system 124 may order the integrity-enhanced TSN data message 344 based on, as an example, the order in which the data messages 314 were received into the middleware layer 304. As such, the TSN end system 124 may assign sequence values such as successive number values to successive data messages 314 as the data messages 314 are being received into the middleware layer 304 or to successive integrity-enhanced TSN data message 344 as the integrity-enhanced TSN data messages 344 are being transmitted out of the middleware layer 304.

In summary and as shown in FIG. 3A, the TSN end system 124 receives data messages 314 from the user application 312 via the application interface layer 302 and transmits the data messages 314 into the middleware layer 304. In the middleware layer 304, based on settings that may be user input or automatically generated, the TSN end system 124 may generate one or more of a timestamp 320, a checksum 322, a source identifier 324, and a sequence value 326 to populate one or more of the time integrity field 330, the data integrity field 332, the source integrity field 334, and the ordinal integrity field 336 respectively, to form an integrity-enhanced TSN data message 344. The time integrity field 330, the data integrity field 332, the source integrity field 334, and the ordinal integrity field 336 may be part of the header 316 of the integrity-enhanced TSN data message 344. The TSN end system 124 may then transmit the integrity-enhanced TSN data message 344 to the network stack layer 306, followed by the TSN end station 308, and then to the physical layer 310.

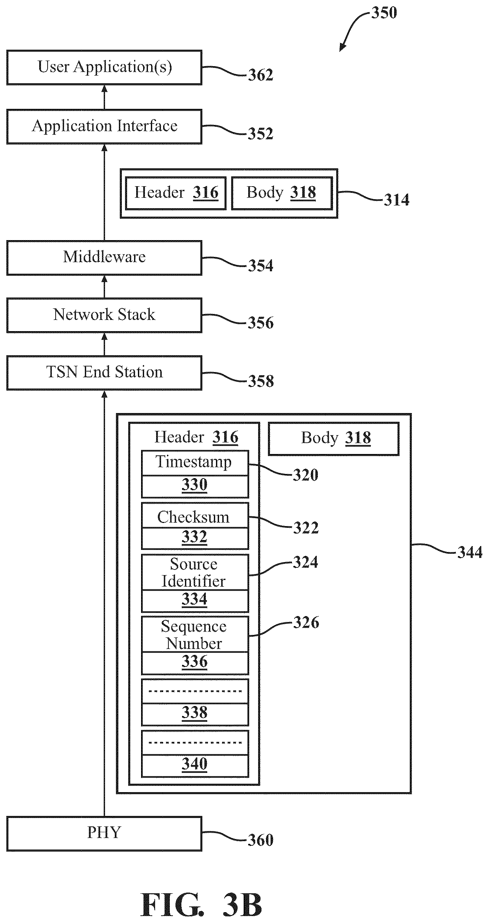

FIG. 3B shows an example of the protocol stack 350 in the TSN end system 124 and in the receive direction. In the receive direction, the TSN end system 124 receives integrity-enhanced TSN data messages 344 from the physical layer 360. The TSN end system 124 transmits the integrity-enhanced TSN data messages 344, which may include a header 316 with one or more populated integrity fields 330, 332, 334, 336, from the physical layer 360, through the TSN end station 358 and the network stack layer 356, to the middleware layer 354. In the middleware layer 354, the TSN end system 124 may extract one or more of the information in the integrity fields 330, 332, 334, 336 of the integrity-enhanced TSN data messages 344. As an example, the TSN end system 124 may extract one or more of a timestamp 320, a checksum 322, a source identifier 324, and a sequence value 326 from the time integrity field 330, the data integrity field 332, the source integrity field 334, and the ordinal integrity field 336, respectively. The TSN end system 124 may extract the timestamp 320 from the time integrity field 330. The TSN end system 124 may then compare the timestamp 320 to a current time based on the gPTP, or more specifically, a fault tolerant gPTP. The TSN end system 124 may then determine whether the timestamp 320 is within a predetermined time period. In a case where the timestamp 320 is within the predetermined time period, the TSN end system 124 may mark the integrity-enhanced TSN data message 344 as valid and still relevant. In a case where the timestamp 320 is outside the predetermined time period, such that the time difference between the timestamp 320 and the current time according to the gPTP exceeds the predetermined time period, the TSN end system 124 may mark the integrity-enhanced TSN data message 344 as invalid, obsolete, and/or irrelevant. The TSN end system 124 may mark the integrity-enhanced TSN data message 344 as having an error as the integrity-enhanced TSN data message 344 arrived late and is no longer valid or useful. The TSN end system 124 may discard the integrity-enhanced TSN data message 344.

The TSN end system 124 may extract the checksum 322 from the data integrity field 332. The TSN end system 124 may process the data in the header 316 and/or the body 318 of the integrity-enhanced TSN data message 344 using any suitable algorithm or function such as the cyclic redundancy check (CRC) function to generate a checksum. The TSN end system 124 may then compare the checksum 322 in the data integrity field 332 to the generated checksum to determine whether there is a match. In a case where the TSN end system 124 determines that there is a match, the TSN end system 124 may determine that the integrity-enhanced TSN data message 344 is error-free. In a case where the TSN end system 124 determines that there is not a match, the TSN end system 124 may mark the integrity-enhanced TSN data message 344 as having an error and/or may discard the integrity-enhanced TSN data message 344.

The TSN end system 124 may extract the source identifier 324 from the source integrity field 334. The TSN end system 124 may compare the source identifier 324 in the source integrity field 334 to a predetermined source identifier value to determine whether there is a match. In a case where the TSN end system 124 determines that there is a match, the TSN end system 124 determines that the integrity-enhanced TSN data message 344 is error-free. In a case where the TSN end system 124 determines that there is not a match, the TSN end system 124 may mark the integrity-enhanced TSN data message 344 as having an error and/or may discard the integrity-enhanced TSN data message 344.

The TSN end system 124 may extract the sequence value 326 from the ordinal integrity field 336. The TSN end system 124 may compare the sequence value 326 in the ordinal integrity field 336 to a predetermined sequence value to determine whether there is a match. In a case where the TSN end system 124 determines that there is a match, the TSN end system 124 may determine that the integrity-enhanced TSN data message 344 is error-free. In a case where the TSN end system 124 determines that there is not a match, the TSN end system 124 may mark the integrity-enhanced TSN data message 344 as having an error and/or may discard the integrity-enhanced TSN data message 344.

In summary and as shown in FIG. 3B, the TSN end system 124 receives integrity-enhanced TSN data messages 344 from the physical layer 360 via the TSN end station 358 and transmits the integrity-enhanced TSN data messages 344 through the network stack layer 356 to the middleware layer 354. In the middleware layer 354, based on settings that may be user input or automatically generated, the TSN end system 124 may extract one or more of a timestamp 320, a checksum 322, a source identifier 324, and a sequence value 326 from the time integrity field 330, the data integrity field 332, the source integrity field 334, and the ordinal integrity field 336 respectively within the integrity-enhanced TSN data message 344, leaving the data message 314. The TSN end system 124 may verify or validate the timestamp 320, the checksum 322, the source identifier 324, and the sequence value 326. The TSN end system 124 may then transmit the data message 314 to the application interface layer 352 and then to the user application 362.

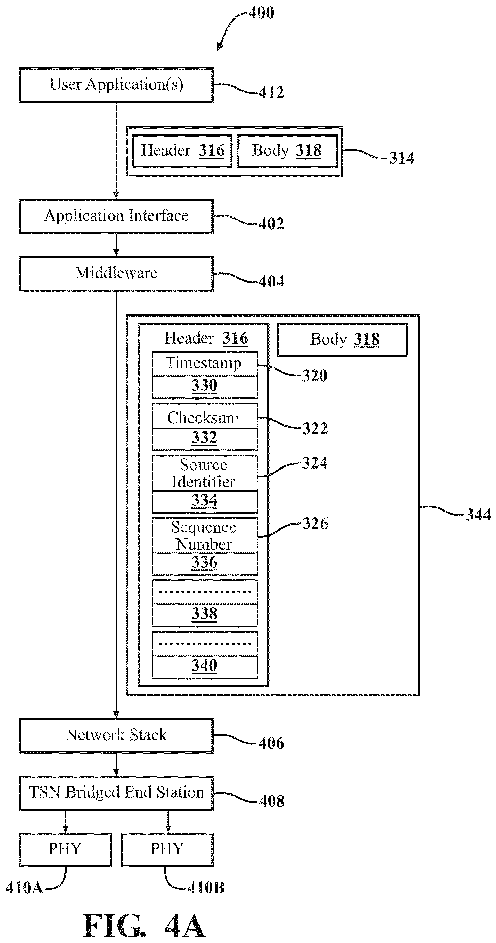

FIGS. 4A-4B show examples of protocol stacks 400, 450 in a TSN end system 124. In other words, the TSN end system 124 includes a protocol stack 400, 450. In the embodiments illustrated in FIGS. 4A-4B, the TSN end system 124 includes a single protocol stack 400, 450 that interfaces with the user application(s) 412, 462 and two physical layers 410A, 410B, 460A, 460B. The protocol stack 400, 450 may include an application interface layer 402, 452, a middleware layer 404, 454, a network stack layer 406, 456, and a TSN bridged end station 408, 458.

In the transmit direction, the TSN end system 124 receives a data message 314 from the user application(s) 412 and transmits an integrity-enhanced TSN data message 344 to the two physical layers 410A, 410B. In the receive direction, the TSN end system 124 receives the integrity-enhanced TSN data message 344 from the two physical layers 460A, 460B and transmits the data message 314 to the user application(s) 462.

FIG. 4A shows an example of the protocol stack 400 in the TSN end system 124 and in the transmit direction. In the transmit direction, the TSN end system 124 receives the data message 314 into the application interface layer 402 from the user application 412. The data message 314 may include a header 316 and a body 318. The TSN end system 124 transfers the data message 314 from the application interface layer 402 to the middleware layer 404. Within the middleware layer 404, the TSN end system 124 may generate a header 316 for the data message 314 in a case where the data message 314 does not have a header 316. Alternatively, the data message 314 coming into the middleware layer 404 may already include a header 316. The header 316 may already include integrity fields such as a time integrity field 330, a data integrity field 332, a source integrity field 334, and/or an ordinal integrity field 336. The header 316 may also include other fields 338, 340. In some embodiments, the other fields 338, 340 may represent and/or include information related to multiple layer functionalities such as data representation, encoding, encryption, and interhost communication management in the presentation and/or session layers.

The TSN end system 124 may determine whether to include one or more of the integrity fields 330, 332, 334, 336 based on user input and/or an automated system. As such, for user input, the TSN end system 124 may be programmed to generate and populate one or more of the integrity fields 330, 332, 334, 336 based on a setting in the user input.

In a case where the integrity fields 330, 332, 334, 336 do not exist in the header 316, the TSN end system 124 may generate the integrity field(s) 330, 332, 334, 336. The TSN end system 124 may then populate one or more integrity fields 330, 332, 334, 336 in the header 316. The TSN end system 124 may generate one or more of a timestamp 320, a checksum 322, a source identifier 324, and a sequence value 326 to populate the one or more integrity fields 330, 332, 334, 336 of the integrity-enhanced TSN data message 344.

The TSN end system 124 may utilize a generic Precision Time Protocol (gPTP), or more specifically, a fault tolerant gPTP to determine a timestamp 320 for the data message 314. The TSN end system 124 may generate the timestamp 320 based on the gPTP and may populate the time integrity field 330 with the timestamp 320. The timestamp 320 may be based on a current time of the gPTP. The TSN end system 124 may generate a checksum 322 based on the incoming data message 314. The TSN end system 124 may generate the checksum 322 based on the data in the header 316 and/or the body 318 of the data message 314. The TSN end system 124 may generate the checksum 322 based on the data in the header 316 and/or the body 318 of the integrity-enhanced data message 314. The TSN end system 124 may utilize any suitable algorithm such as a cyclic redundancy check (CRC) to generate the checksum 322. The TSN end system 124 may then populate the data integrity field 332 with the checksum 322. The TSN end system 124 may generate a source identifier based on the origin or source of the data message 314, and then populate the source integrity field 334 with the source identifier 324. The TSN end system 124 may order the data messages 314 based on, as an example, the order in which the data messages 314 were received into the middleware layer 404. As such, the TSN end system 124 may assign sequence values such as successive number values to successive data messages 314 based on the order that the data messages 314 are being received into the middleware layer 304 or to successive integrity-enhanced TSN data message 344 as the integrity-enhanced TSN data messages 344 are being transmitted out of the middleware layer 304.

In summary and as shown in FIG. 4A, the TSN end system 124 receives data messages 314 from the user application 412 via the application interface layer 402 and transmits the data messages 314 into the middleware layer 404. In the middleware layer 404, based on settings that may be user input or automatically generated, the TSN end system 124 may generate one or more of a timestamp 320, a checksum 322, a source identifier 324, and a sequence value 326 to populate one or more of the time integrity field 330, the data integrity field 332, the source integrity field 334, and the ordinal integrity field 336 respectively, to form an integrity-enhanced TSN data message 344 based on the data message 314. The time integrity field 330, the data integrity field 332, the source integrity field 334, and the ordinal integrity field 336 may be part of the header 316 of the integrity-enhanced TSN data message 344. The TSN end system 124 may then transmit the integrity-enhanced TSN data message 344 to the network stack layer 406, followed by the TSN bridged end station 408, and then to the physical layers 410A, 410B. A first version and a second version of the integrity-enhanced TSN data message 344 may be transmitted to the first and second physical layers 410A, 410B respectively.

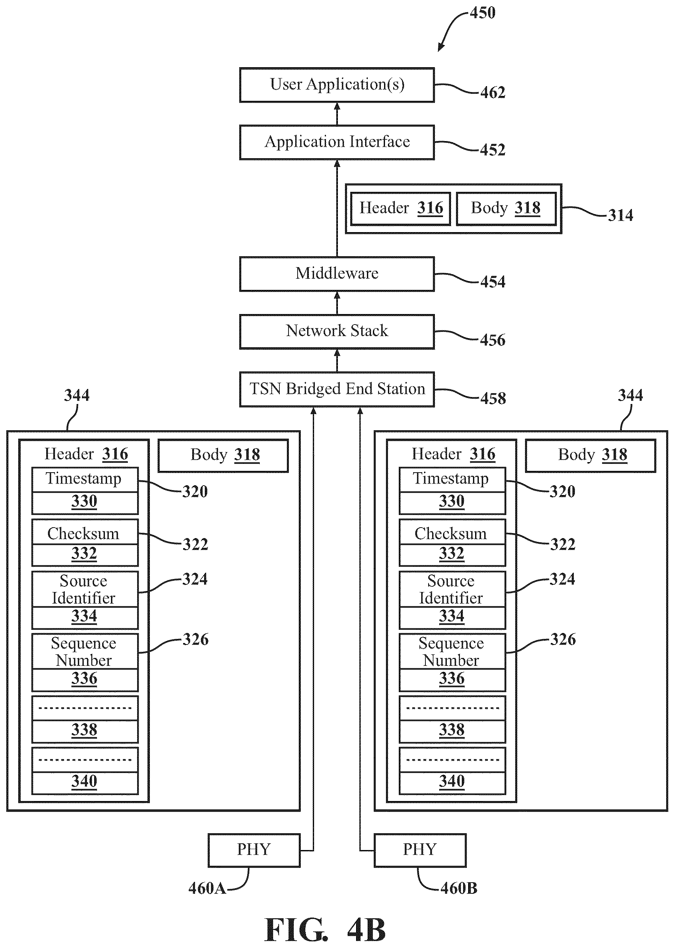

FIG. 4B shows an example of the protocol stack 450 in the TSN end system 124 and in the receive direction. In the receive direction, the TSN end system 124 receives integrity-enhanced TSN data messages 344 from the physical layers 460A, 460B. More specifically, the TSN end system 124 may receive a first version and a second version of the integrity-enhanced TSN data messages 344. The TSN end system 124 transmits the integrity-enhanced TSN data messages 344, which may include a header 316 with one or more populated integrity fields 330, 332, 334, 336, from the physical layers 460A, 460B, through the TSN bridged end station 458 and the network stack layer 456, to the middleware layer 454. In the middleware layer 454, the TSN end system 124 may extract one or more of the information in the integrity fields 330, 332, 334, 336 of the integrity-enhanced TSN data messages 344 from the first and second physical layers 410A, 410B. As an example, the TSN end system 124 may extract one or more of a timestamp 320, a checksum 322, a source identifier 324, and a sequence value 326 from the time integrity field 330, the data integrity field 332, the source integrity field 334, and the ordinal integrity field 336, respectively. The TSN end system 124 may extract the timestamp 320 from the time integrity field 330. The TSN end system 124 may then compare the timestamp 320 to a current time based on the gPTP, or more specifically, a fault tolerant gPTP. The TSN end system 124 may then determine whether the timestamp 320 is within a predetermined time period. In a case where the timestamp 320 is within the predetermined time period, the TSN end system 124 may mark the integrity-enhanced TSN data message 344 as valid and still relevant. In a case where the timestamp 320 is outside the predetermined time period, such that the time difference between the timestamp 320 and the current time according to the gPTP exceeds the predetermined time period, the TSN end system 124 may mark the integrity-enhanced TSN data message 344 as invalid, obsolete, and/or irrelevant. The TSN end system 124 may mark the integrity-enhanced TSN data message 344 as having an error as the integrity-enhanced TSN data message 344 arrived late and is no longer valid or useful. The TSN end system 124 may discard the integrity-enhanced TSN data message 344.

The TSN end system 124 may extract the checksum 322 from the data integrity field 332. The TSN end system 124 may process the data in the header 316 and/or the body 318 of the integrity-enhanced TSN data message 344 using any suitable algorithm or function such as the cyclic redundancy check (CRC) function to generate a checksum. The TSN end system 124 may then compare the checksum 322 in the data integrity field 332 to the generated checksum to determine whether there is a match. In a case where the TSN end system 124 determines that there is a match, the TSN end system 124 may determine that the integrity-enhanced TSN data message 344 is error-free. In a case where the TSN end system 124 determines that there is not a match, the TSN end system 124 may mark the integrity-enhanced TSN data message 344 as having an error and/or may discard the integrity-enhanced TSN data message 344.

The TSN end system 124 may extract the source identifier 324 from the source integrity field 334. The TSN end system 124 may compare the source identifier 324 in the source integrity field 334 to a predetermined source identifier value to determine whether there is a match. In a case where the TSN end system 124 determines that there is a match, the TSN end system 124 determines that the integrity-enhanced TSN data message 344 is error-free. In a case where the TSN end system 124 determines that there is not a match, the TSN end system 124 may mark the integrity-enhanced TSN data message 344 as having an error and/or may discard the integrity-enhanced TSN data message 344.

The TSN end system 124 may extract the sequence value 326 from the ordinal integrity field 336. The TSN end system 124 may compare the sequence value 326 in the ordinal integrity field 336 to a predetermined sequence value to determine whether there is a match. In a case where the TSN end system 124 determines that there is a match, the TSN end system 124 may determine that the integrity-enhanced TSN data message 344 is error-free. In a case where the TSN end system 124 determines that there is not a match, the TSN end system 124 may mark the integrity-enhanced TSN data message 344 as having an error and/or may discard the integrity-enhanced TSN data message 344.

The TSN end system 124 may process the integrity-enhanced TSN data messages 344 being received from the physical layers 460A, 460B in any suitable order. As an example, the TSN end system may alternate between the integrity-enhanced TSN data messages 344 being received from the first and second physical layers 460A, 460B. As an example, the TSN end system 124 may also compare the timestamp 320 of the integrity-enhanced TSN data message 344 from the first physical layer 460A with the timestamp 320 of the integrity-enhanced TSN data message 344 from the second physical layer 460B. The TSN end system 124 may make a determination on whether to transmit or discard one or both integrity-enhanced TSN data messages 344 based on a relationship and/or the timestamps 320 of the integrity-enhanced TSN data messages 344. As another example, the TSN end system 124 may also compare the checksum 322 of the integrity-enhanced TSN data messages 344 from the first physical layer 460A with the checksum 322 of the integrity-enhanced TSN data messages 344 from the second physical layer 460B. The TSN end system 124 may make a determination on whether to transmit or discard one or both integrity-enhanced TSN data messages 344 based on the checksums 322 of the integrity-enhanced TSN data messages 344. As another example, the TSN end system 124 may also compare the source identifier 324 of the integrity-enhanced TSN data messages 344 from the first physical layer 460A with the source identifier 324 of the integrity-enhanced TSN data messages 344 from the second physical layer 460B. The TSN end system 124 may make a determination on whether to transmit or discard one or both integrity-enhanced TSN data messages 344 based on the source identifiers 324 of the integrity-enhanced TSN data messages 344. The TSN end system 124 may also compare the sequence value 326 of the integrity-enhanced TSN data messages 344 from the first physical layer 460A with the sequence value 326 of the integrity-enhanced TSN data messages 344 from the second physical layer 460B. The TSN end system 124 may make a determination on whether to transmit or discard one or both integrity-enhanced TSN data messages 344 based on the sequence values 326 of the integrity-enhanced TSN data messages 344.

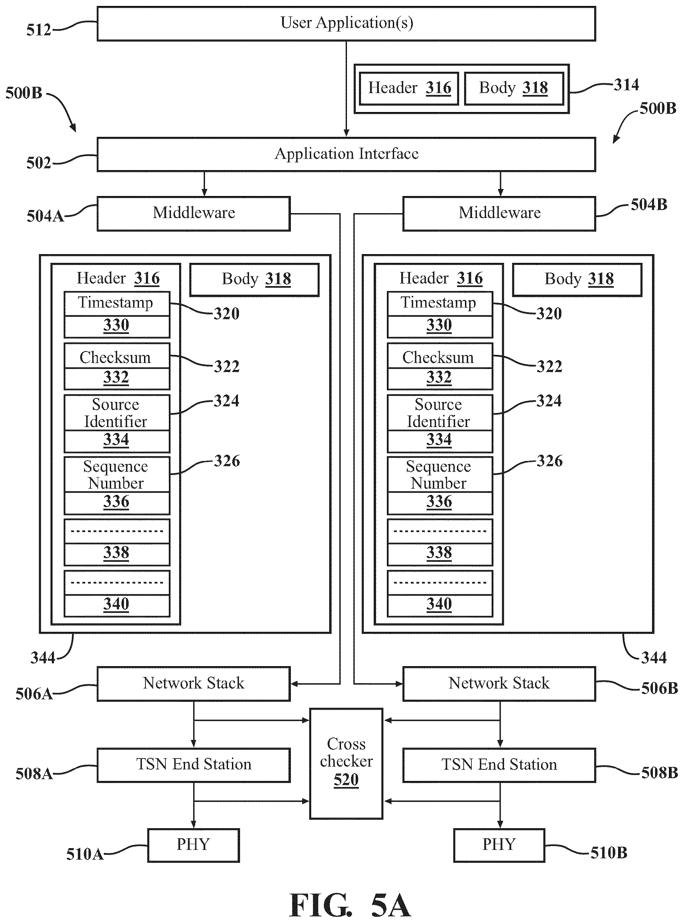

FIGS. 5A-5B show examples of protocol stacks 500A, 500B, 550A, 550B in a TSN end system 124. In other words, the TSN end system 124 includes two protocol stacks 500A, 500B, 550A, 550B, making the TSN end system 124 a dual channel end system. In the embodiments illustrated in FIGS. 5A-5B, the TSN end system 124 includes two protocol stacks 500A, 500B, 550A, 550B that interface with the user application 512, 562 and two physical layers 510A, 510B, 560A, 560B, respectively. Each protocol stack 500A, 500B, 550A, 550B may include an application interface layer 502, 552, a middleware layer 504A, 504B, 554A, 554B, a network stack layer 506A, 506B, 556A, 556B, and a TSN end station 508A, 508B, 558A, 558B. In between the protocol stacks 500A, 500B, 550A, 550B, the TSN end system 124 may include a cross checker 520. The TSN end system 124 may utilize the cross checker 520 to compare the data being transmitted through the protocol stacks 500A, 500B, 550A, 550B. In the transmit direction, the TSN end system 124 receives data messages 314 from the user application 512 and transmits integrity-enhanced TSN data messages 344 to the two physical layers 510A, 510B. In the receive direction, the TSN end system 124 receives integrity-enhanced TSN data messages 344 from the two physical layers 560A, 560B and transmits data messages 314 to the user application 562.

FIG. 5A shows an example of the protocol stacks 500A, 500B in the TSN end system 124 and in the transmit direction. In the transmit direction, the TSN end system 124 receives the data message 314 into the application interface layer 502 from the user application 512. The same data message 314 is being transmitted through the two middleware layers 504A, 504B. The protocol stacks 500A, 500B may include different technology and/or may be from different vendors.

The data message 314 may include a header 316 and a body 318. The TSN end system 124 transfers the data message 314 from the application interface layer 502 to the middleware layers 504A, 504B. Within the middleware layers 504A, 504B, the TSN end system 124 may generate a header 316 for the data message 314 in a case where the data message 314 does not have a header 316. Alternatively, the data messages 314 coming into the middleware layer 504A, 504B may already include a header 316. The header 316 may already include integrity fields such as a time integrity field 330, a data integrity field 332, a source integrity field 334, and/or an ordinal integrity field 336. The header 316 may also include other fields 338, 340. The TSN end system 124 may determine whether to include one or more of the integrity fields 330, 332, 334, 336 based on user input and/or an automated system. As such, for user input, the TSN end system 124 may be programmed to generate and populate one or more of the integrity fields 330, 332, 334, 336 based on a setting in the user input.

The TSN end system 124 may generate and/or populate the integrity fields 330, 332, 334, 336 within the middleware layers 504A, 504B in similar methods to those as described above.

As such, the TSN end system 124 may form two integrity-enhanced TSN data messages 344, one from each middleware layer 504A, 504B. The TSN end system 124 may then transmit the integrity-enhanced TSN data messages 344 to the respective network stack layers 506A, 506B. The TSN end system 124 may cross check the integrity-enhanced TSN data messages 344 being output from the network stack layers 506A, 506B by comparing one or more of the integrity fields 330, 332, 334, 336, the headers 316, and the bodies 318 of the integrity-enhanced TSN data messages 344 in the first protocol stack 500A and the second protocol stack 500B in the cross checker 520. In a case where the data in the two integrity-enhanced TSN data messages 344 matches, the TSN end system 124 may transmit the two integrity-enhanced TSN data messages 344 to the respective TSN end station 508A, 508B, and then to the respective physical layer 510A, 510B. In a case where the data in the two integrity-enhanced TSN data messages 344 do not match, the TSN end system 124 may determine which of the two integrity-enhanced TSN data messages 344 has an error using any suitable algorithm such as a comparison method. The TSN end system 124 may further determine whether to replace one integrity-enhanced TSN data message 344 with the other integrity-enhanced TSN data message 344 and transmit the error-free integrity-enhanced TSN data message 344 to the TSN end stations 508A, 508B, and then to the physical layers 510A, 510B.

The cross checker 520 can be in any suitable location such as between the network stack 506A, 506B and the TSN end station 508A, 508B or between the TSN end station 508A, 508B and the physical layer 510A, 510B. The cross checker 520 may be in multiple locations such as between the network stack 506A, 506B and the TSN end station 508A, 508B and between the TSN end station 508A, 508B and the physical layer 510A, 510B.

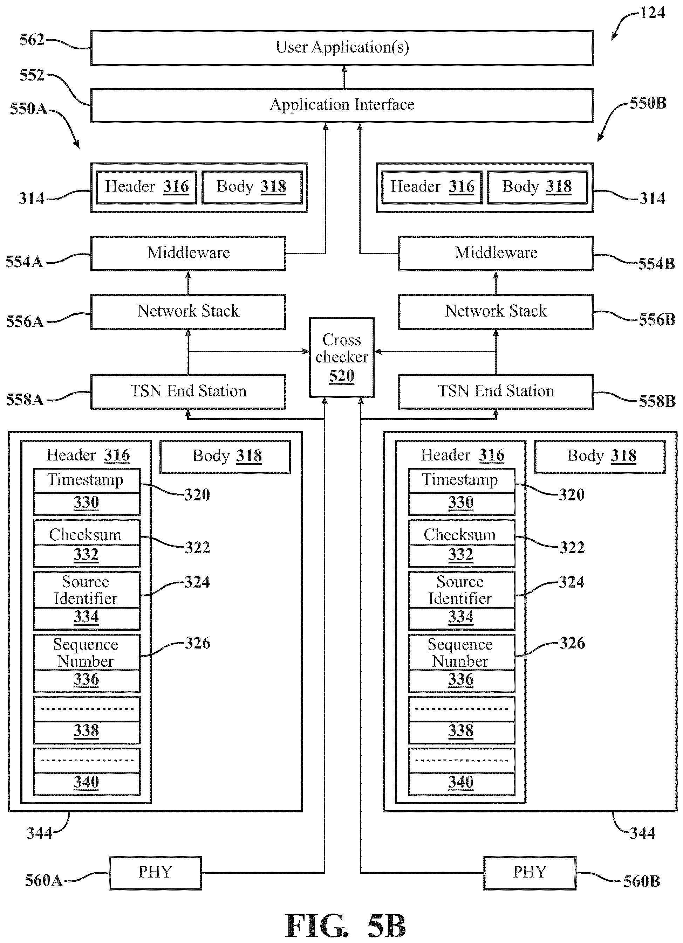

FIG. 5B shows an example of the protocol stacks 550A, 550B in the TSN end system 124 and in the receive direction. In the receive direction, the TSN end system 124 receives integrity-enhanced TSN data messages 344 from the physical layers 560A, 560B. The TSN end system 124 transmits the integrity-enhanced TSN data messages 344, which may include a header 316 with one or more populated integrity fields 330, 332, 334, 336, from the physical layers 560A, 560B, through the TSN end station 558A, 558B and the network stack layers 556A, 556B, to the middleware layers 554A, 554B. In the TSN end station 558A, 558B , the TSN end system 124 may cross check the integrity-enhanced TSN data messages 344 received from the physical layers 560A, 560B using the cross checker 520. The TSN end system 124 may compare the integrity-enhanced TSN data messages 344 and in a case where the integrity-enhanced TSN data messages 344 match, the TSN end system 124 may mark the integrity-enhanced TSN data messages 344 as valid and transmit the integrity-enhanced TSN data messages 344 to the middleware layers 554A, 554B. In a case where the integrity-enhanced TSN data messages 344 do not match, the TSN end system may mark the integrity-enhanced TSN data messages 344 as invalid and/or discard one or both integrity-enhanced TSN data messages 344.

In the middleware layers 554A, 554B, the TSN end system 124 may extract one or more of the information in the integrity fields 330, 332, 334, 336 of the integrity-enhanced TSN data messages 344 from the first and second physical layers 510A, 510B. As an example, the TSN end system 124 may extract one or more of a timestamp 320, a checksum 322, a source identifier 324, and a sequence value 326 from the time integrity field 330, the data integrity field 332, the source integrity field 334, and the ordinal integrity field 336, respectively. The TSN end system 124 may extract the timestamp 320 from the time integrity field 330. The TSN end system 124 may then compare the timestamp 320 to a current time based on the gPTP, or more specifically, a fault tolerant gPTP. The TSN end system 124 may then determine whether the timestamp 320 is within a predetermined time period. In a case where the timestamp 320 is within the predetermined time period, the TSN end system 124 may mark the integrity-enhanced TSN data messages 344 as valid and still relevant. In a case where the timestamp 320 is outside the predetermined time period, such that the time difference between the timestamp 320 and the current time according to the gPTP exceeds the predetermined time period, the TSN end system 124 may mark the integrity-enhanced TSN data messages 344 as invalid, obsolete, and/or irrelevant. In some embodiments, the current time may be based on a system time or local clock. Alternatively, the current time may be based on a time that is synchronized to a sender via out-of-band mechanisms such as a discrete signal (e.g. 1PPS). The TSN end system 124 may mark the integrity-enhanced TSN data message 344 as having an error as the integrity-enhanced TSN data message 344 arrived late and is no longer valid or useful. The TSN end system 124 may also compare the timestamp 320 of the integrity-enhanced TSN data message 344 from the first physical layer 560A with the time stamp of the integrity-enhanced TSN data message 344 from the second physical layer 560B. The TSN end system 124 may make a determination on whether to transmit or discard one or both data messages based on the timestamps 320 of the integrity-enhanced TSN data messages 344. The TSN end system 124 may further determine whether to replace one integrity-enhanced TSN data message 344 with the other integrity-enhanced TSN data message 344.

The TSN end system 124 may extract the checksum 322 from the data integrity field 332. The TSN end system 124 may process the data in the header 316 and/or the body 318 of the integrity-enhanced TSN data messages 344 using any suitable algorithm or function such as the cyclic redundancy check (CRC) function to generate a checksum. The TSN end system 124 may then compare the checksum 322 in the data integrity field 332 to the generated checksum to determine whether there is a match. In a case where the TSN end system 124 determines that there is a match, the TSN end system 124 may determine that the integrity-enhanced TSN data messages 344 are error-free. In a case where the TSN end system 124 determines that there is not a match, the TSN end system 124 may mark one or both of the integrity-enhanced TSN data messages 344 as having an error and/or may discard the integrity-enhanced TSN data messages 344. The TSN end system 124 may also compare the checksum 322 of the integrity-enhanced TSN data message 344 from the first physical layer 560A with the checksum 322 of the integrity-enhanced TSN data message 344 from the second physical layer 560B. The TSN end system 124 may make a determination on whether to transmit or discard one or both integrity-enhanced TSN data messages 344 based on the checksums 322 of the integrity-enhanced TSN data messages 344. The TSN end system 124 may further determine whether to replace one integrity-enhanced TSN data message 344 with the other integrity-enhanced TSN data message 344.

The TSN end system 124 may extract the source identifier 324 from the source integrity field 334. The TSN end system 124 may compare the source identifier 324 in the source integrity field 334 to a predetermined source identifier value to determine whether there is a match. In a case where the TSN end system 124 determines that there is a match, the TSN end system 124 determines that the integrity-enhanced TSN data messages 344 are error-free. In a case where the TSN end system 124 determines that there is not a match, the TSN end system 124 may mark one or both of the integrity-enhanced TSN data messages 344 as having an error and/or may discard the integrity-enhanced TSN data messages 344. The TSN end system 124 may further determine whether to replace one integrity-enhanced TSN data message 344 with the other integrity-enhanced TSN data message 344.

The TSN end system 124 may extract the sequence value 326 from the ordinal integrity field 336. The TSN end system 124 may compare the sequence value 326 in the ordinal integrity field 336 to a predetermined sequence value to determine whether there is a match. In a case where the TSN end system 124 determines that there is a match, the TSN end system 124 may determine that the integrity-enhanced TSN data message 344 is error-free. In a case where the TSN end system 124 determines that there is not a match, the TSN end system 124 may mark the integrity-enhanced TSN data message 344 as having an error and/or may discard the integrity-enhanced TSN data message 344. The TSN end system 124 may further determine whether to replace one integrity-enhanced TSN data message 344 with the other integrity-enhanced TSN data message 344.

The TSN end system 124 may process the integrity-enhanced TSN data messages 344 being received from the physical layers 460A, 460B in any suitable order. The TSN end system 124 may strip the integrity fields 330, 332, 334, 336, 338 from the integrity-enhanced TSN data messages 344, leaving data messages 314 that may transmitted to the components and/or applications through the application interface layers 552A, 552B and the network layers 562A, 562B. In other embodiments, the TSN end system 124 may include multiple copies of the dual channel end system, which may increase the integrity and availability of data message(s) 314 between user applications such as a talker LRU and a listener LRU.

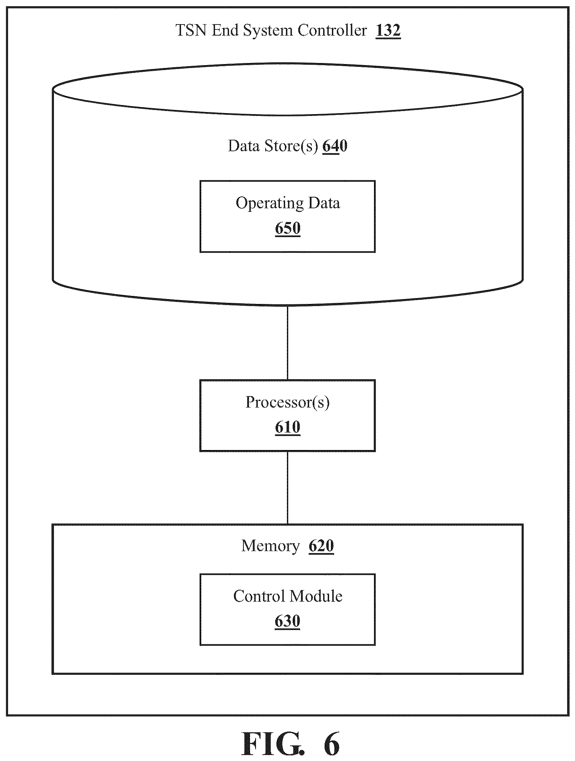

With reference to FIG. 6, a block diagram of a TSN end system controller 132 is shown. The TSN end system controller 132 is a control unit within the TSN end system 124. The TSN end system controller 132 may include a processor(s) 610. Accordingly, the processor(s) 610 may be a part of the TSN end system controller 132, or the processor(s) 610 may be external to the TSN end system controller 132 such that the TSN end system controller 132 may access the processor(s) 610 through a data bus or another communication pathway. In one or more embodiments, the processor(s) 610 is an application-specific integrated circuit that may be configured to implement functions associated with a control module 630. More generally, in one or more aspects, the processor(s) 610 is an electronic processor, such as a microprocessor that can perform various functions as described herein when loading the control module 630 and executing encoded functions associated therewith.

The TSN end system controller 132 may include a memory 620 that stores the control module 630. The memory 620 may be a random-access memory (RAM), read-only memory (ROM), a hard disk drive, a flash memory, or other suitable memory for storing the control module 630. The control module 630 is, for example, a set of computer-readable instructions that, when executed by the processor(s) 610, cause the processor(s) 610 to perform the various functions disclosed herein. As such, the control module 630 may be a set of machine-readable instructions and the memory 620 stores the machine-readable instructions. While, in one or more embodiments, the control module 630 is a set of instructions embodied in the memory 620, in further aspects, the control module 630 may include hardware, such as processing components (e.g., controllers), circuits, etc., for independently performing one or more of the noted functions.

The TSN end system controller 132 may include a data store(s) 640 for storing one or more types of data. Accordingly, the data store(s) 640 may be a part of the TSN end system controller 132, or the TSN end system controller 132 may access the data store(s) 640 through a data bus or another communication pathway. The data store(s) 640 is, in one embodiment, an electronically based data structure for storing information. In at least one approach, the data store 640 is a database that is stored in the memory 620 or another suitable medium, and that is configured with routines that can be executed by the processor(s) 610 for analyzing stored data, providing stored data, organizing stored data, and so on. In either case, in one embodiment, the data store 640 stores data used by the control module 630 in executing various functions. In one embodiment, the data store 640 may be able to store operating data 650 and/or other information that is used by the control module 630. The operating data 650 may include data settings such as settings for the inclusion of integrity fields in the data. The operating data 650 may also include predetermined data relating to time periods, checksums, source identifiers, and/or sequence values.

The data store(s) 640 may include volatile and/or non-volatile memory. Examples of suitable data stores 640 include RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The data store(s) 640 may be a component of the processor(s) 610, or the data store(s) 640 may be operatively connected to the processor(s) 610 for use by the processor(s) 610. The term "operatively connected" or "in communication with" as used throughout this description, can include direct or indirect connections, including connections without direct physical contact.

In some arrangements and as previously mentioned, the TSN end system 124 may include a single protocol stack 300, 350. The single protocol stack 300, 350 may include an application interface layer 302, 352, a middleware layer 304, 354, a network stack layer 306, 356, and a TSN end station 308, 358. In some arrangements, the TSN end station may be a TSN bridged end station 408, 458 with two interfaces, each connecting to a separate physical layer 410A, 410B, 450A, 450B. In some arrangements, the TSN end system 124 may include two or more protocol stacks 500A, 500B, 550A, 550B. In a case where the TSN end system 124 includes two protocol stacks - the protocol stack 500A, 550A and the second protocol stack 500B, 550B. The protocol stack 500A, 550A may include an application interface layer 502, 552, a middleware layer 504A, 554A, a network stack layer 506A, 556A and a TSN end station 508A, 558A. The second protocol stack 500B, 550B may include the application interface layer 502, 552, a second middleware layer 504B, 554B, a second network stack layer 506B, 556B, and a second TSN end station 508B, 558B.

In one embodiment, the control module 630 may include instructions that, when executed by the processor(s) 610, cause the processor(s) 610 to, in response to receiving a data message 314 from an application such as a user application 312, form an integrity-enhanced time-sensitive network (TSN) data message 344 by appending an integrity field 330, 332, 334, 336 to the data message 314. The integrity field 330, 332, 334, 336 may be include at least one or more of a timestamp 320, a checksum 322, a source identifier 324, and a sequence value 326. As previously described, the TSN end system 124, or more specifically, the TSN end system controller 132 and the control module 630 may generate and/or populate the header 316 and the integrity fields 330, 332, 334, 336 within the header 316 using the timestamp 320, the checksum 322, the source identifier 324, and/or the sequence value 326.

In one embodiment, the control module 630 may include instructions that, when executed by the processor(s) 610, cause the processor(s) 610 to, in response to receiving the data message 314 from the user application 512, form a second integrity-enhanced TSN data message 344 by appending a second integrity field 330, 332, 334, 336 to the data message 314. The second integrity field 330, 332, 334, 336 may include at least one or more of a second timestamp 320, a second checksum 322, a second source identifier 324, and a second sequence value 326. As previously described, the TSN end system 124, or more specifically, the TSN end system controller 132 and the control module 630 may generate and/or populate the header 316 of the data message 314 and the integrity fields 330, 332, 334, 336 within the header 316 using the second timestamp 320, the second checksum 322, the second source identifier 324, and/or the second sequence value 326. As previously mentioned, the TSN end system controller 132 may determine the timestamp 320 and the second timestamp 320 based on a fault tolerant generic Precision Time Protocol (gPTP). In one embodiment, the control module 630 may include instructions that, when executed by the processor(s) 610, cause the processor(s) 610 to form the integrity-enhanced TSN data message 344 by appending the integrity field(s) 330, 332, 334, 336 to the data message 314 within the middleware layer 304, 404, 504A, 504B. As such, in some arrangements, the control module 630 may form the integrity-enhanced TSN data message 344 in the middleware layer 504A and the second integrity-enhanced TSN data message 344 in the second middleware layer 504B.

In one embodiment, the control module 630 may include instructions that, when executed by the processor(s) 610, cause the processor(s) 610 to determine whether there is an error in at least one of the integrity-enhanced TSN data message 344 and the second integrity-enhanced TSN data message 344 by comparing the integrity-enhanced TSN data message 344 and the second integrity-enhanced TSN data message 344. In such a case, the TSN end system controller 132 may compare the headers 316, the integrity fields 330, 332, 334, 336 within the headers 316, and the bodies 318 of the integrity-enhanced TSN data message 344 and the second integrity-enhanced TSN data message 344 to determine whether information in the integrity-enhanced TSN data message 344 and the second integrity-enhanced TSN data message 344 match.

In one embodiment, the control module 630 may include instructions that, when executed by the processor(s) 610, cause the processor(s) 610 to form the integrity-enhanced TSN data message 344 by appending the integrity field 330, 332, 334, 336 to the data message 314 within the middleware layer 304, 404, 504A, 504B. As such, in some arrangements, the control module 630 may form the integrity-enhanced TSN data message 344 in the middleware layer 304, 404, 504A and the second integrity-enhanced TSN data message 344 in the second middleware layer 504B.

In one embodiment, the control module 630 may include instructions that, when executed by the processor(s) 610, cause the processor(s) 610 to transmit the integrity-enhanced TSN data message 344 to the physical layer 310, 410A, 410B, 510A, 510B via a TSN end system protocol stack. The TSN end system protocol stack refers to the protocol stack 300, 350, 400, 450, 500A, 500B, 550A, 550B within the TSN end system 124. As previously mentioned, the protocol stack 300, 350, 400, 450, 500A, 500B, 550A, 550B includes at least one or more of an application interface layer 302, 352, 402, 452, 502A, 502B, 552A, 552B, a middleware layer 304, 354, 404, 454, 504A, 504B, 554A, 554B, a network stack layer 306, 356, 406, 456, 506A, 506B, 556A, 556B, and a TSN end station 308, 358, 408, 458, 508A, 508B, 558A, 558B. As such, the TSN end system controller 132 may transmit the integrity-enhanced TSN data message 344 that includes one or more populated integrity fields 330, 332, 334, 336 to the physical layer 310, 360, 410A, 410B, 460A, 460B, 510A, 510B, 560A, 560B through the network stack layer 306, 356, 406, 456, 506A, 506B, 556A, 556B, and the TSN end station 308, 358, 408, 458, 508A, 508B, 558A, 558B.

The TSN end station 408, 458 may be a TSN bridged end station 408, 458. The bridged end station 408, 458 may be configured to include one or more fields in the headers 316 of the integrity-enhanced TSN data message 344 that are selectively based on the egress PHY port 410A, 410B. The TSN bridged end station 408, 458 includes a first interface and a second interface. The first interface is connected to the physical layer 410A, 460A and the second interface is connected to a second physical layer 410B, 460B.

The TSN end system controller 132 and the control module 630 may control the TSN bridged end station 408, 458 to transmit a first version of the integrity-enhanced TSN data message 344 to the physical layer 410A via the first interface and a second version of the integrity-enhanced TSN data message 344 to the second physical layer 410B via the second interface. In such an embodiment, the control module 630 may include instructions that, when executed by the processor(s) 610, cause the processor(s) 610 to determine whether there is an error in at least one of the first version of the integrity-enhanced TSN data message 344 and the second version of the integrity-enhanced TSN data message 344 by comparing the first version of the integrity-enhanced TSN data message 344 and the second version of the integrity-enhanced TSN data message 344. The control module 630 may further include instructions that, when executed by the processor(s) 610, cause the processor(s) 610 to, in response to there being an error in one of the first version of the integrity-enhanced TSN data message 344 and the second version of the integrity-enhanced TSN data message 344 and not the other of the first version of the integrity-enhanced TSN data message 344 and the second version of the integrity-enhanced TSN data message 344, replace the one with the other of the first version of the integrity-enhanced TSN data message 344 and the second version of the integrity-enhanced TSN data message 344. The TSN end system controller 132 may then transmit the error-free integrity-enhanced TSN data message 344 to the physical layer 410A and the second physical layer 410B.

As previously mentioned, the TSN end system 124 may include two TSN end system protocol stacks 500A, 500B, 550A 550B - a TSN end system protocol stack 500A, 550A and a second TSN end system protocol stack 500B, 550B. Each of the two TSN end system protocol stacks 500A, 500B, 550A 550B may include one or more of an application interface layer 502, 552, a middleware layer 504A, 504B, 554A, 554B, a network stack layer 506A, 506B, 556A, 556B, and a TSN end station 508A, 508B, 558A, 558B. As such, the TSN end system protocol stack 500A, 550A may include one or more of an application interface layer 502, 552, a middleware layer 504A, 554A, a network stack layer 506A, 556A, and a TSN end station 508A, 558A, and the second TSN end system protocol stack 500B, 550B may include one or more of the application interface layer 502, 552, a second middleware layer 504B, 554B, a second network stack layer 506B, 556B, and a second TSN end station 508B, 558B. In such an arrangement, the TSN end system 124 may receive the data message 314 from the user application 512 via the application interface layer 502. The TSN end system 124 may transmit the integrity-enhanced TSN data message(s) 344 based on the data message 314, to the physical layers 510A, 510B. Also, in such arrangement, the TSN end system 124 may receive the integrity-enhanced TSN data message(s) 344 from the physical layers 560A, 560B, via the TSN end stations 558A, 558B. The TSN end system 124 may transmit the data message(s) 314 based on integrity-enhanced TSN data message(s) to the user application 562. In one embodiment, the control module 630 may include instructions that, when executed by the processor(s) 610, cause the processor(s) 610 to receive the integrity-enhanced TSN data message(s) 344 from the physical layer(s) 360, 460A, 460B, 560A, 560B. The control module 630 may transmit the integrity-enhanced TSN data message(s) 344 from the physical layer(s) 360, 460A, 460B, 560A, 560B to the user application 362, 462, 562 through the TSN end system 124.

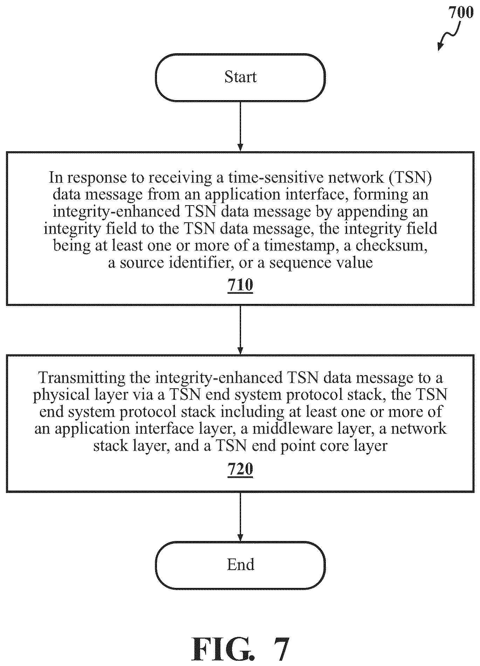

FIG. 7 is a flowchart illustrating one embodiment of a method 700 associated with maintaining the integrity of data messages 314 being transmitted via a TSN end system 124. The method 700 will be described from the viewpoint of the TSN end system 124 of FIG. 1 and the TSN end system controller 132 of FIG. 6. However, the method 700 may be adapted to be executed in any one of several different situations and not necessarily by the TSN end system 124 or the TSN end system controller 132.

At step 710, the control module 630 may cause the processor(s) 610 to, in response to receiving a data message 314 from an application 312, forming an integrity-enhanced TSN data message 344 by appending an integrity field 330, 332, 334, 336 to the data message 314. The integrity field 330, 332, 334, 336 includes at least one or more of a timestamp 320, a checksum 322, a source identifier 324, and a sequence value 326. The data message 314 may be transmitted from, as an example, an application or component within the aircraft 10, through the TSN end system 124 to the physical layer 310. The TSN end system 124 may include a protocol stack 300. The protocol stack 300 may include an application interface layer 302, a middleware layer 304, a network stack layer 306, and a TSN end station 308. The control module 630 may cause the processor(s) 610 to form the integrity-enhanced TSN data message 344 within the middleware layer 304.

At step 720, the control module 630 may cause the processor(s) 610 to transmit the integrity-enhanced TSN data message 344 to a physical layer 310 via the protocol stack 300. As such, after forming the integrity-enhanced TSN data message 344 within the middleware layer 304, the control module 630 may transmit the integrity-enhanced TSN data message 344 to the network stack layer 306, then the TSN end station 308, followed by the physical layer 310.

Detailed embodiments are disclosed herein. However, it is to be understood that the disclosed embodiments are intended only as examples. Therefore, specific structural and functional details disclosed herein are not to be interpreted as limiting, but merely as a basis for the claims and as a representative basis for teaching one skilled in the art to variously employ the aspects herein in virtually any appropriately detailed structure. Further, the terms and phrases used herein are not intended to be limiting but rather to provide an understandable description of possible implementations. Various embodiments are shown in the figures above, however the embodiments are not limited to the illustrated structure or application.

The flowcharts and block diagrams in the figures illustrate the architecture, functionality, and operation of possible implementations of systems, methods, and computer program products according to various embodiments. In this regard, each block in the flowcharts or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved.

The systems, components and/or processes described above may be realized in hardware or a combination of hardware and software and may be realized in a centralized fashion in one processing system or in a distributed fashion where different elements are spread across several interconnected processing systems. Any kind of processing system or another apparatus adapted for carrying out the methods described herein is suited. A typical combination of hardware and software may be a processing system with computer-usable program code that, when being loaded and executed, controls the processing system such that it carries out the methods described herein. The systems, components and/or processes also may be embedded in a computer-readable storage, such as a computer program product or other data programs storage device, readable by a machine, tangibly embodying a program of instructions executable by the machine to perform methods and processes described herein. These elements also may be embedded in an application product which comprises all the features enabling the implementation of the methods described herein and, which when loaded in a processing system, is able to carry out these methods.

Furthermore, arrangements described herein may take the form of a computer program product embodied in one or more computer-readable media having computer-readable program code embodied, e.g., stored, thereon. Any combination of one or more computer-readable media may be utilized. The computer-readable medium may be a computer-readable signal medium or a computer-readable storage medium. The phrase "computer-readable storage medium" means a non-transitory storage medium. A computer-readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer-readable storage medium would include the following: a portable computer diskette, a hard disk drive (HDD), a solid-state drive (SSD), a read-only memory (ROM), an erasable programmable read-only memory (EPROM or Flash memory), a portable compact disc read-only memory (CD-ROM), a digital versatile disc (DVD), an optical storage device, a magnetic storage device, or any suitable combination of the foregoing. In the context of this document, a computer-readable storage medium may be any tangible medium that may contain or store a program for use by or in connection with an instruction execution system, apparatus, or device.

Generally, modules, as used herein, include routines, programs, objects, components, data structures, and so on that perform particular tasks or implement particular data types. In further aspects, a memory generally stores the noted modules. The memory associated with a module may be a buffer or cache embedded within a processor, a RAM, a ROM, a flash memory, or another suitable electronic storage medium. In still further aspects, a module as envisioned by the present disclosure is implemented as an application-specific integrated circuit (ASIC), a hardware component of a system on a chip (SoC), as a programmable logic array (PLA), or as another suitable hardware component that is embedded with a defined configuration set (e.g., instructions) for performing the disclosed functions.

Program code embodied on a computer-readable medium may be transmitted using any appropriate medium, including but not limited to wireless, wireline, optical fiber, cable, RF, etc., or any suitable combination of the foregoing. Computer program code for carrying out operations for aspects of the present arrangements may be written in any combination of one or more programming languages, including an object-oriented programming language such as Java^{™}, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The terms "a" and "an," as used herein, are defined as one or more than one. The term "plurality," as used herein, is defined as two or more than two. The term "another," as used herein, is defined as at least a second or more. The terms "including" and/or "having," as used herein, are defined as comprising (e.g., open language). The phrase "at least one of ... and ...." as used herein refers to and encompasses any and all possible combinations of one or more of the associated listed items. As an example, the phrase "at least one of A, B, and C" includes A only, B only, C only, or any combination thereof (e.g., AB, AC, BC, or ABC).

Aspects herein may be embodied in other forms without departing from the spirit or essential attributes thereof. Accordingly, reference should be made to the following claims, rather than to the foregoing specification, as indicating the scope hereof.

Further aspects are provided by the subject matter of the following clauses.

A system includes a processor and a memory. The memory stores machine-readable instructions that, when executed by the processor, cause the processor to, in response to receiving a data message from an application, form an integrity-enhanced time-sensitive network (TSN) data message by appending an integrity field to the data message and transmit the integrity-enhanced TSN data message to a physical layer via a TSN end system protocol stack. The integrity field includes at least one or more of a timestamp, a checksum, a source identifier, and a sequence value. The TSN end system protocol stack includes at least one or more of an application interface layer, a middleware layer, a network stack layer, and a TSN end station.

The system according to any of the preceding clauses, wherein the TSN end station is a TSN bridged end station, wherein the TSN bridged end station has a first interface and a second interface, wherein the TSN bridged end station transmits a first version of the integrity-enhanced TSN data message to the physical layer via the first interface and a second version of the integrity-enhanced TSN data message to a second physical layer via the second interface, and wherein the machine-readable instructions further include instructions that when executed by the processor cause the processor to determine whether there is an error in at least one of the first version of the integrity-enhanced TSN data message and the second version of the integrity-enhanced TSN data message by comparing the first version of the integrity-enhanced TSN data message and the second version of the integrity-enhanced TSN data message.

The system according to any of the preceding clauses, wherein the machine-readable instructions further include instructions that when executed by the processor cause the processor to, in response to there being an error in one of the first version of the integrity-enhanced TSN data message and the second version of the integrity-enhanced TSN data message, replace the one with other of the first version of the integrity-enhanced TSN data message and the second version of the integrity-enhanced TSN data message.

The system according to any of the preceding clauses, wherein the machine-readable instructions further include instructions that when executed by the processor cause the processor to, in response to receiving the data message from the application, form a second integrity-enhanced TSN data message by appending a second integrity field to the data message, transmit the second integrity-enhanced TSN data message to a second physical layer via a second TSN end system protocol stack, and determine whether there is an error in at least one of the integrity-enhanced TSN data message and the second integrity-enhanced TSN data message by comparing the integrity-enhanced TSN data message and the second integrity-enhanced TSN data message. The second integrity field includes at least one or more of a second timestamp, a second checksum, a second source identifier, and a second sequence value. The second TSN end system protocol stack includes at least one or more of the application interface layer, a second middleware layer, a second network stack layer, and a second TSN end station.

The system according to any of the preceding clauses, wherein the machine-readable instructions further include instructions that when executed by the processor cause the processor to form the integrity-enhanced TSN data message by appending the integrity field to the data message within the middleware layer.

The system according to any of the preceding clauses, wherein the machine-readable instructions further include instructions that when executed by the processor cause the processor to determine the timestamp based on a fault tolerant generic Precision Time Protocol (gPTP).

The system according to any of the preceding clauses, wherein the machine-readable instructions further include instructions that when executed by the processor cause the processor to receive the integrity-enhanced TSN data message from the physical layer.

A method comprises, in response to receiving a data message from an application, forming an integrity-enhanced time-sensitive network (TSN) data message by appending an integrity field to the data message and transmitting the integrity-enhanced TSN data message to a physical layer via a TSN end system protocol stack. The integrity field includes at least one or more of a timestamp, a checksum, a source identifier, and a sequence value. The TSN end system protocol stack includes at least one or more of an application interface layer, a middleware layer, a network stack layer, and a TSN end station.

The method according to any of the preceding clauses, wherein the TSN end station is a TSN bridged end station, wherein the TSN bridged end station has a first interface and a second interface, wherein the TSN bridged end station transmits a first version of the integrity-enhanced TSN data message to the physical layer via the first interface and a second version of the integrity-enhanced TSN data message to a second physical layer via the second interface. The method according to any of the preceding clauses, further comprises determining whether there is an error in at least one of the first version of the integrity-enhanced TSN data message and the second version of the integrity-enhanced TSN data message by comparing the first version of the integrity-enhanced TSN data message and the second version of the integrity-enhanced TSN data message.

The method according to any of the preceding clauses, further comprises, in response to there being an error in one of the first version of the integrity-enhanced TSN data message and the second version of the integrity-enhanced TSN data message, replacing the one with other of the first version of the integrity-enhanced TSN data message and the second version of the integrity-enhanced TSN data message.

The method according to any of the preceding clauses, further comprises, in response to receiving the data message from the application, forming a second integrity-enhanced TSN data message by appending a second integrity field to the data message, transmitting the second integrity-enhanced TSN data message to a second physical layer via a second TSN end system protocol stack, and determining whether there is an error in at least one of the integrity-enhanced TSN data message and the second integrity-enhanced TSN data message by comparing the integrity-enhanced TSN data message and the second integrity-enhanced TSN data message. The second integrity field includes at least one or more of a second timestamp, a second checksum, a second source identifier, and a second sequence value. The second TSN end system protocol stack includes at least one or more of the application interface layer, a second middleware layer, a second network stack layer, and a second TSN end station.

The method according to any of the preceding clauses, further comprises forming the integrity-enhanced TSN data message by appending the integrity field to the data message within the middleware layer.

The method according to any of the preceding clauses, further comprises determining the timestamp based on a fault tolerant generic Precision Time Protocol (gPTP).

The method according to any of the preceding clauses, further comprises receiving the integrity-enhanced TSN data message from the physical layer.

A non-transitory computer-readable medium includes instructions that, when executed by a processor, cause the processor to, in response to receiving a data message from an application, form an integrity-enhanced time-sensitive network (TSN) data message by appending an integrity field to the data message and transmit the integrity-enhanced TSN data message to a physical layer via a TSN end system protocol stack. The integrity field includes at least one or more of a timestamp, a checksum, a source identifier, and a sequence value. The TSN end system protocol stack includes at least one or more of an application interface layer, a middleware layer, a network stack layer, and a TSN end station.

The non-transitory computer-readable medium according to any of the preceding clauses, wherein the TSN end station is a TSN bridged end station, wherein the TSN bridged end station has a first interface and a second interface, wherein the TSN bridged end station transmits a first version of the integrity-enhanced TSN data message to the physical layer via the first interface and a second version of the integrity-enhanced TSN data message to a second physical layer via the second interface, and wherein the instructions include instructions to determine whether there is an error in at least one of the first version of the integrity-enhanced TSN data message and the second version of the integrity-enhanced TSN data message by comparing the first version of the integrity-enhanced TSN data message and the second version of the integrity-enhanced TSN data message.

The non-transitory computer-readable medium according to any of the preceding clauses, wherein the instructions include instructions to, in response to there being an error in one of the first version of the integrity-enhanced TSN data message and the second version of the integrity-enhanced TSN data message, replace the one with other of the first version of the integrity-enhanced TSN data message and the second version of the integrity-enhanced TSN data message.

The non-transitory computer-readable medium according to any of the preceding clauses, wherein the instructions include instructions to, in response to receiving the data message from the application, form a second integrity-enhanced TSN data message by appending a second integrity field to the data message, transmit the second integrity-enhanced TSN data message to a second physical layer via a second TSN end system protocol stack, and determine whether there is an error in at least one of the integrity-enhanced TSN data message and the second integrity-enhanced TSN data message by comparing the integrity-enhanced TSN data message and the second integrity-enhanced TSN data message. The second integrity field includes at least one or more of a second timestamp, a second checksum, a second source identifier, and a second sequence value. The second TSN end system protocol stack includes at least one or more of the application interface layer, a second middleware layer, a second network stack layer, and a second TSN end station.

The non-transitory computer-readable medium according to any of the preceding clauses, wherein the instructions include instructions to form the integrity-enhanced TSN data message by appending the integrity field to the data message within the middleware layer.

The non-transitory computer-readable medium according to any of the preceding clauses, wherein the instructions include instructions to determine the timestamp based on a fault tolerant generic Precision Time Protocol (gPTP).

## Claims

1. A system (124), comprising:
a processor (610); and
a memory (620) storing machine-readable instructions that, when executed by the processor (610), cause the processor (610) to:
in response to receiving a data message (314) from an application (312), form an integrity-enhanced time-sensitive network (TSN) data message (344) by appending an integrity field (330, 332, 334, 336) to the data message (314), the integrity field (330, 332, 334, 336) including at least one or more of a timestamp (320), a checksum (322), a source identifier (324), or a sequence value (326); and
transmit the integrity-enhanced TSN data message (344) to a physical layer (310) via a TSN end system protocol stack (300), the TSN end system protocol stack (300) including at least one or more of an application interface layer (302), a middleware layer (304), a network stack layer (306), and a TSN end station (308).

2. The system (124) of claim 1, wherein the TSN end station (308) is a TSN bridged end station (408), wherein the TSN bridged end station (408) has a first interface and a second interface, wherein the TSN bridged end station (408) transmits a first version of the integrity-enhanced TSN data message (344) to the physical layer (460A) via the first interface and a second version of the integrity-enhanced TSN data message (344) to a second physical layer (460B) via the second interface, and wherein the machine-readable instructions further include instructions that when executed by the processor (610) cause the processor (610) to:
determine whether there is an error in at least one of the first version of the integrity-enhanced TSN data message (344) and the second version of the integrity-enhanced TSN data message (344) by comparing the first version of the integrity-enhanced TSN data message (344) and the second version of the integrity-enhanced TSN data message (344).

3. The system (124) of claim 2, wherein the machine-readable instructions further include instructions that when executed by the processor (610) cause the processor (610) to:
in response to there being an error in one of the first version of the integrity-enhanced TSN data message (344) and the second version of the integrity-enhanced TSN data message (344), replace the one with other of the first version of the integrity-enhanced TSN data message (344) and the second version of the integrity-enhanced TSN data message (344).

4. The system (124) of any preceding claim, wherein the machine-readable instructions further include instructions that when executed by the processor (610) cause the processor (610) to:
in response to receiving the data message (314) from the application (512) , form a second integrity-enhanced TSN data message (344) by appending a second integrity field (330, 332, 334, 336) to the data message (314), the second integrity field (330, 332, 334, 336) including at least one or more of a second timestamp (320), a second checksum (322), a second source identifier (324), or a second sequence value (326);
transmit the second integrity-enhanced TSN data message (344) to a second physical layer (510B) via a second TSN end system protocol stack (500B), the second TSN end system protocol stack (500B) including at least one or more of the application interface layer (502), a second middleware layer (504B), a second network stack layer (506B), and a second TSN end station (508B); and
determine whether there is an error in at least one of the integrity-enhanced TSN data message (344) and the second integrity-enhanced TSN data message (344) by comparing the integrity-enhanced TSN data message (344) and the second integrity-enhanced TSN data message (344).

5. The system (124) of any preceding claim, wherein the machine-readable instructions further include instructions that when executed by the processor (610) cause the processor (610) to:
form the integrity-enhanced TSN data message (344) by appending the integrity field (330, 332, 334, 336) to the data message (314) within the middleware layer (304).

6. The system (124) of any preceding claim, wherein the machine-readable instructions further include instructions that when executed by the processor (610) cause the processor (610) to:
determine the timestamp (320) based on a fault tolerant generic Precision Time Protocol (gPTP).

7. The system (124) of any preceding claim, wherein the machine-readable instructions further include instructions that when executed by the processor (610) cause the processor (610) to:
receive the integrity-enhanced TSN data message (344) from the physical layer (360).

8. A method (700), comprising:
in response to receiving a data message (314) from an application (312), forming an integrity-enhanced time-sensitive network (TSN) data message (344) by appending an integrity field (330, 332, 334, 336) to the data message (314), the integrity field (330, 332, 334, 336) including at least one or more of a timestamp (320), a checksum (322), a source identifier (324), or a sequence value (326); and
transmitting the integrity-enhanced TSN data message (344) to a physical layer (310) via a TSN end system protocol stack (300), the TSN end system protocol stack (300) including at least one or more of an application interface layer (302), a middleware layer (304), a network stack layer (306), and a TSN end station (308).

9. The method (700) of claim 8, wherein the TSN end station (308) is a TSN bridged end station (408) wherein the TSN bridged end station (408) has a first interface and a second interface, wherein the TSN bridged end station (408) transmits a first version of the integrity-enhanced TSN data message (344) to the physical layer (460A) via the first interface and a second version of the integrity-enhanced TSN data message (344) to a second physical layer (460B) via the second interface, and further comprising:
determining whether there is an error in at least one of the first version of the integrity-enhanced TSN data message (344) and the second version of the integrity-enhanced TSN data message (344) by comparing the first version of the integrity-enhanced TSN data message (344) and the second version of the integrity-enhanced TSN data message (344).

10. The method (700) of claim 9, further comprising:
in response to there being an error in one of the first version of the integrity-enhanced TSN data message (344) and the second version of the integrity-enhanced TSN data message (344), replacing the one with other of the first version of the integrity-enhanced TSN data message (344) and the second version of the integrity-enhanced TSN data message (344).

11. The method (700) of any of claims 8 to 10, further comprising:
in response to receiving the data message (314) from the application (512), forming a second integrity-enhanced TSN data message (344) by appending a second integrity field (330, 332, 334, 336) to the data message (314), the second integrity field (330, 332, 334, 336) including at least one or more of a second timestamp (320), a second checksum (322), a second source identifier (324), or a second sequence value (326);
transmitting the second integrity-enhanced TSN data message (344) to a second physical layer (510B) via a second TSN end system protocol stack (500B), the second TSN end system protocol stack (500B) including at least one or more of the application interface layer (502), a second middleware layer (504B), a second network stack layer (506B), and a second TSN end station (508B); and
determining whether there is an error in at least one of the integrity-enhanced TSN data message (344) and the second integrity-enhanced TSN data message (344) by comparing the integrity-enhanced TSN data message (344) and the second integrity-enhanced TSN data message (344).

12. The method (700) of any of claims 8 to 11, further comprising:
forming the integrity-enhanced TSN data message (344) by appending the integrity field (330, 332, 334, 336) to the data message (314) within the middleware layer (304).

13. The method (700) of any of claims 8 to 12, further comprising:
determining the timestamp (320) based on a fault tolerant generic Precision Time Protocol (gPTP).

14. The method (700) of any of claims 8 to 13, further comprising:
receiving the integrity-enhanced TSN data message (344) from the physical layer (360).

15. A non-transitory computer-readable medium including instructions that, when executed by a processor (610), cause the processor (610) to execute the method (700) of any of claims 8-14.
